# FASCICULE DE BREVET EUROPEEN

(11) **EP 0 691 536 B1**
(45) Date de publication et mention de la délivrance du brevet: **06.10.2004**
(21) Numéro de dépôt: 95401411.4
(22) Date de dépôt: 15.06.1995
(51) Int. Cl.: G01N 22/00, G01F 1/74

(54) **Débitmètre polyphasique**
Mehrphasen-Durchflussmesser
Polyphasic flowmeter

(30) Priorité: 08.07.1994 FR 9408502; 20.12.1994 FR 9415455
(43) Date de publication de la demande: 10.01.1996
(73) Titulaire: Institut Français du Pétrole, 92502 Rueil-Malmaison (FR)
(72) Inventeur: Constant, Michel, F-93200 Saint Denis (FR)

(56) Documents cités:
- EP-A- 0 354 115
- EP-A- 0 399 876
- US-A- 4 764 718
- US-A- 4 812 739

## Description

La présente invention concerne une méthode et un dispositif permettant de déterminer la proportion et la nature des différentes phases constituant un milieu polyphasique contenu dans un même volume, ces phases possédant au moins une caractéristique intrinsèque qui permet de les discriminer.

Elle est particulièrement bien adaptée pour déterminer la proportion de chaque phase constituant un fluide polyphasique comportant plusieurs phases ayant chacune une valeur de permittivité dépendant de sa nature et au moins deux des valeurs de permittivité permettant de discriminer les phases.

L'objet de la présente invention s'applique avantageusement, mais non exclusivement, à la détermination du taux d'occupation ou de la proportion des phases constituant un effluent pétrolier, telles que la phase aqueuse, la phase organique, la phase gazeuse, et à la réalisation d'une cartographie de cet effluent, pour une section donnée d'une conduite dans laquelle il circule.

L'effluent pétrolier peut aussi comporter une phase solide, par exemple des particules de sable, des cristaux d'hydrates, des asphaltènes ou d'autres hétérogénéités.

La connaissance des quantités de chacune des phases d'un effluent pétrolier et, en particulier, la connaissance précise des débits d'eau, d'huile et de gaz mesurés simultanément en sortie de puits de production pétrolière est nécessaire, notamment en gisement pour le contrôle et la sécurité de la production de chaque puits et, en exploitation, pour le suivi de la production et la protection du réseau de collecte transférant les effluents bruts vers un centre de séparation et/ou de traitement.

Un autre exemple d'application est relatif au transport d'effluents pétroliers de type polyphasique sans séparation des phases, utilisant des dispositifs de pompage dont le fonctionnement optimal peut dépendre à tout instant de la composition des effluents, et plus particulièrement de son débit moyen liquide et de son rapport volumétrique gaz/liquide.

Les écoulements de fluide polyphasique ou d'effluent pétrolier présentent des régimes à faciès nombreux, rapidement variables qui nécessitent des dispositifs et des procédés de mesure rapides, adaptés notamment, à ce type d'écoulement.

L'invention trouve aussi son application dans tout autre domaine dans lequel il est utile de connaître de façon non destructive, la proportion et la répartition de phases discriminables et non miscibles constituant un milieu polyphasique.

Elle trouve aussi son application lorsque l'on cherche à obtenir la proportion d'une phase présente dans un milieu polyphasique, ce milieu pouvant comporter plusieurs phases ayant des natures différentes, et discernables les unes des autres par au moins un paramètre.

On connaît déjà des dispositifs qui mettent en oeuvre un champ électrique basse fréquence et qui, par une mesure de capacitance, ou de conductance du milieu polyphasique permettent de réaliser une cartographie de ce milieu. Toutefois, les dispositifs de ce type présentent de nombreux inconvénients tels que la conductivité du milieu, les fuites inter-électrodes, la formation d'un film en parois dans certains cas, des problèmes de mouillabilité, qui peuvent diminuer la fiabilité et la simplicité des mesures, souhaitables dans le cadre d'une application industrielle.

Les dispositifs basés sur l'utilisation de rayons gamma ou de rayons X, offrent des sensibilités inférieures à celles des dispositifs utilisant des ondes électromagnétiques, et se révèlent être des méthodes plus lourdes à mettre en oeuvre.

D'autres dispositifs d'imagerie utilisent la Résonance Magnétique Nucléaire. Ils offrent la possibilité d'effectuer des mesures indépendantes de la proportion et du débit de l'eau et de l'huile, par exemple, mais présentent en contrepartie des problèmes d'encombrement, de poids et de temps de réponse qui en font des dispositifs peu compatibles avec les contraintes de l'industrie pétrolière.

La demande FR-2.647.549 du demandeur décrit un dispositif et une méthode utilisant des faisceaux de micro-ondes pour déterminer la proportion moyenne de chacune des phases (eau, huile ou gaz) contenues dans un effluent polyphasique en écoulement dans une conduite.

A partir de l'enseignement contenu dans les documents US-4.812.739 et US-4.820.970, il est connu de faire varier la fréquence d'un faisceau micro-ondes autour de la fréquence de résonance d'une phase d'un fluide polyphasique et de déterminer la proportion de cette phase par une mesure de l'atténuation de l'onde ayant traversé le fluide, mais non de remonter à la proportion de toutes les phases contenues dans ce fluide .

De plus, ces deux derniers documents ne décrivent pas des dispositifs d'émission et de réception des ondes présentant une parfaite adaptabilité à la variation de composition d'un fluide polyphasique, et en particulier à la variation de la permittivité du fluide au cours du temps.

Le document US-4.764.718 propose un capteur non destructif à micro-ondes pour mesurer la concentration de plusieurs fluides contenus dans un échantillon. Le capteur permet d'irradier l'échantillon avec un signal transmis et de mesurer le déphasage et l'atténuation du signal ayant traversé l'échantillon. Le déphasage et l'atténuation sont comparés avec des courbes de calibration. La fréquence du signal de micro-ondes est sélectionnée en fonction de la profondeur de pénétration du signal micro-ondes dans l'échantillon et de la salinité de l'échantillon.

La présente invention vise à pallier les inconvénients mentionnés ci-dessus et à améliorer la précision des mesures des dispositifs dans ce domaine. Elle permet en particulier de déterminer de manière précise la nature et la proportion de chaque phase incluse dans un fluide polyphasique, notamment la proportion des phases contenues dans un effluent de type pétrolier en écoulement par exemple dans une conduite, ceci sans danger pour le personnel opérateur.

Elle permet de plus d'effectuer les mesures de manière rapide, en temps quasi-réel, c'est-à-dire que le temps de mesure est faible devant les variations ou les instabilités spatio-temporelle de la structure des fluides polyphasiques.

Dans toute la suite de la description, l'expression "adapter une antenne" signifie que l'on optimise la transmission du champ électromagnétique de l'antenne au milieu polyphasique.

De plus, l'expression "antenne multiélément" est utilisée pour désigner une antenne comportant plusieurs éléments.

La présente invention concerne une méthode permettant de déterminer la proportion d'au moins une phase constituant une partie d'un milieu polyphasique comportant au moins une phase liquide et au moins une phase gazeuse, lesdites phases présentant une permittivité permettant de les discriminer.

La méthode comporte au moins un cycle de mesure défini par les étapes suivantes:
a) on irradie le milieu polyphasique avec un faisceau d'ondes électromagnétiques provenant d'une première source d'émission, ledit faisceau ayant une valeur de fréquence (fe),
b) on mesure la valeur de l'amplitude (Aei) et le déphasage (Phei) du faisceau d'ondes électromagnétiques ayant traversé ledit milieu, en au moins une zone fixée par rapport au milieu polyphasique ,
c) on fait varier la valeur de fréquence du faisceau d'ondes électromagnétiques de (fe) à une fréquence (fe+1), et on réitère les étapes a) et b)
d) on détermine la proportion de chacune des phases liquides et/ou gaz pour au moins une zone en comparant les mesures obtenues aux étapes b) et c) avec des données préalablement mémorisées dans un moyen de traitement, en tenant compte de la valeur de fréquence associée.

Les données préalablement mémorisées peuvent être des mesures d'amplitude et de déphasage d'un faisceau d'ondes électromagnétiques ayant traversé un fluide de composition connue.

Le milieu peut être en écoulement et avant l'étape a), on peut amortir les turbulences de l'écoulement pour que les phases se présentent sous forme de strates disposées selon la densité desdites phases.

Le milieu polyphasique étant en écoulement dans une conduite de section donnée, on peut réaliser une ou plusieurs fois le cycle de mesure comportant les étapes a) à d) et en plusieurs points, et on peut en déduire la répartition et la proportion d'au moins une phase pour une section de la conduite définie par la direction du faisceau de micro-ondes et un des côtés de la conduite ayant une direction non parallèle à la direction de propagation du faisceau d'ondes électromagnétiques.

On peut utiliser une antenne d'émission constituée de plusieurs éléments, et une antenne de réception comportant plusieurs éléments, et on peut réaliser l'étape a) en irradiant le milieu à partir de tous les éléments de l'antenne d'émission, puis on effectue l'étape b) en scrutant tous les éléments de l'antenne de réception les unes après les autres.

On peut utiliser une antenne d'émission constituée de plusieurs éléments et une antenne de réception comportant plusieurs éléments, et on peut réaliser l'étape a) en irradiant le milieu à partir d'un élément de l'antenne d'émission, puis on réalise l'étape b) en scrutant l'élément correspondant de l'antenne de réception, et on réitère cette opération pour tous les éléments d'antennes.

On peut utiliser une antenne d'émission constituée de plusieurs éléments et une antenne de réception comportant plusieurs éléments, et on peut effectuer l'étape a) en irradiant le milieu à partir d'un élément de l'antenne d'émission, puis on effectue l'étape b) en scrutant tous les éléments de l'antenne de réception les uns après les autres.

On peut déterminer les données préalablement mémorisées de l'étape d), à partir d'un fluide polyphasique dont la nature et la proportion des phases est connue.

On peut irradier le milieu polyphasique avec un faisceau d'ondes électromagnétiques ayant une valeur de fréquence comprise entre 2 et 8 GHz.

On peut mesurer la vitesse d'au moins une phase, telle la phase liquide et/ou la phase gazeuse et/ou la phase solide, contenue dans le milieu polyphasique par effet Doppler en irradiant le milieu avec un faisceau d'ondes électromagnétiques et/ou d'une onde ultrasonore et on peut déterminer le débit de la ou de chacune des phases.

L'invention concerne également un dispositif pour déterminer la proportion d'au moins une phase contenue dans un milieu polyphasique, ledit milieu polyphasique étant constitué d'au moins une phase liquide et d'au moins une phase gazeuse, ledit milieu étant en circulation dans une conduite de section connue et pourvue de fenêtres transparentes aux ondes électromagnétiques, comportant en combinaison au moins un moyen d'émission d'au moins deux faisceaux d'ondes électromagnétiques, au moins un moyen de réception des deux faisceaux d'ondes électromagnétiques ayant traversé ledit milieu polyphasique, les moyens d'émission et de réception étant situés dans l'alignement des fenêtres, et un moyen de traitement et de commande permettant de déterminer le taux d'occupation de la phase liquide et/ou de la phase gazeuse pour une section donnée de la conduite par comparaison des mesures d'amplitude et de déphasage des deux faisceaux d'ondes électromagnétiques ayant traversé le milieu polyphasique avec des données préalablement mémorisées, en tenant compte des fréquences des faisceaux d'ondes électromagnétiques.

La conduite peut être munie d'un élément de tranquilisation pour favoriser un écoulement stratifié desdites phases.

Les moyens d'émission et de réception peuvent être des antennes large bande comprenant plusieurs éléments, lesdits éléments étant séparés les uns des autres par un premier matériau et le dispositif comporte un second matériau situé entre lesdites antennes et lesdites fenêtres transparentes aux ondes électromagnétiques de la conduite, lesdits premiers et second matériaux ayant des caractéristiques diélectriques permettant d'adapter lesdites antennes à une variation de permittivité relative du milieu polyphasique.

Ledit premier matériau peut être une résine époxy et le second matériau une céramique adaptés à résister à des valeurs de température (T) et de pression (P) élevées, respectivement supérieures à 100°C et 100 bars.

Le dispositif peut comporter un dispositif permettant de mesurer la vitesse d'au moins une phase du milieu polyphasique.

L'application de la méthode et du dispositif peut concerner la détermination de la proportion des phases constituant un effluent pétrolier. Selon un mode préféré de réalisation de l'invention, on utilise un rayonnement micro-ondes qui offre l'avantage d'une utilisation sans danger pour le personnel et nécessite un personnel moins nombreux pour la conduite du dispositif, comparé aux dispositifs faisant appel à des rayonnements gamma, X ou à des émissions de neutrons. De plus, les composants mis en oeuvre dans le dispositif se révèlent être d'un poids, et d'une taille compatibles avec la mobilité demandée à un tel type de dispositif pour son utilisation dans le domaine pétrolier.

L'utilisation de rayonnements micro-ondes de faible longueur d'onde quelques millimètres, par exemple, permet d'obtenir une image précise de la répartition des différentes phases, et d'augmenter la précision des mesures. La définition de la nature et de la quantité des phases est améliorée en effectuant les mesures pour différentes valeurs de fréquences.

De plus, la gamme de fréquences utilisées conduit à un dispositif peu coûteux.

Un autre avantage offert par le dispositif selon un mode particulier de réalisation de l'invention provient de l'utilisation d'antennes spécialement adaptées à la variation temporelle de la structure d'un fluide polyphasique donc à sa composition notamment de sa permittivité diélectrique. Elles sont de plus conçues pour minimiser les pertes apparaissant lorsque le faisceau traverse les parois de la conduite transparentes aux micro-ondes, telles les fenêtres.

Par ailleurs, l'utilisation éventuelle d'un dispositif de détection synchrone augmente la précision des mesures.

Le dispositif est de plus, particulièrement bien adapté pour résister aux agressions provenant du fluide polyphasique avec lequel il se trouve en contact, telles que les agressions chimiques dues à la nature des effluents pétroliers.

La présente invention sera mieux comprise et ses avantages apparaîtront clairement à la lecture de quelques exemples, non limitatifs, illustrés par les figures suivantes parmi lesquelles :
- les figures 1A et 1B montrent respectivement une vue en perspective d'un dispositif selon l'invention et son schéma de principe associé,
- les figures 2A et 2B montrent un détail d'antennes et leur disposition,
- la figure 3 schématise un exemple d'agencement des éléments composant le dispositif de commande et de traitement des signaux selon l'invention,
- la figure 4 schématise un mode de réalisation comprenant une chaîne de mesure unique pour déterminer la quantité et la vitesse de chaque phase,
- la figue 5 schématise un autre exemple de réalisation comprenant une chaîne de mesure de vitesse par effet Doppler en réflexion située en aval de la première chaîne de mesure, et
- la figure 6 montre un mode de réalisation comprenant deux chaînes de mesure utilisant les micro-ondes pour déterminer la quantité d'une phase et sa vitesse.

Les exemples donnés ci-après permettent, notamment, de déterminer la proportion des phases constituant un effluent pétrolier de type polyphasique, en circulation dans une conduite. Les phases à discriminer et dont on souhaite connaître la proportion sont par exemple, une phase aqueuse telle de l'eau ou de la saumure, une phase organique telle de l'huile et une phase gazeuse constituée en majorité par du méthane dont les valeurs relatives de permittivité appartiennent respectivement aux domaines suivants 6 - 100; 2-3; et environ 1. Le contraste de permittivité est très élevé entre l'eau et l'huile ou le gaz, alors que le contraste de permittivité entre le gaz et l'huile est relativement faible.

La saumure est par exemple de l'eau renfermant une quantité de sel variant entre 0 et 300g/l et, de préférence entre 0 et 100g/l de sel.

L'effluent peut éventuellement comporter une phase solide se présentant, par exemple, sous la forme de particules solides, par exemple du sable ou des hydrates.

Dans l'exemple décrit ci-après, on utilise le fait qu'au cours de sa propagation dans un milieu composé de plusieurs phases, tel qu'un fluide polyphasique, un faisceau d'énergie électromagnétique ou champ - électromagnétique, par exemple des micro-ondes, se réfléchit et est diffracté au moins en partie lorsqu'il rencontre une discontinuité qui est un contraste de valeur de permittivité, résultant de la différence de nature des phases.

A partir de la mesure des valeurs d'amplitude et de déphasage du faisceau de micro-ondes diffracté par les discontinuités ou hétérogénéités rencontrées, on forme un tableau de données, on détermine la nature des différentes phases, et, on détermine la proportion de chaque phase contenue dans le fluide polyphasique.

Avantageusement, le faisceau électromagnétique est de faible énergie, de l'ordre de quelques mW.

Une mesure de vitesse de chacune des phases, combinée à la détermination du taux d'occupation des phases incluses dans le fluide polyphasique conduit à la valeur du débit volumique de chacune des phases.

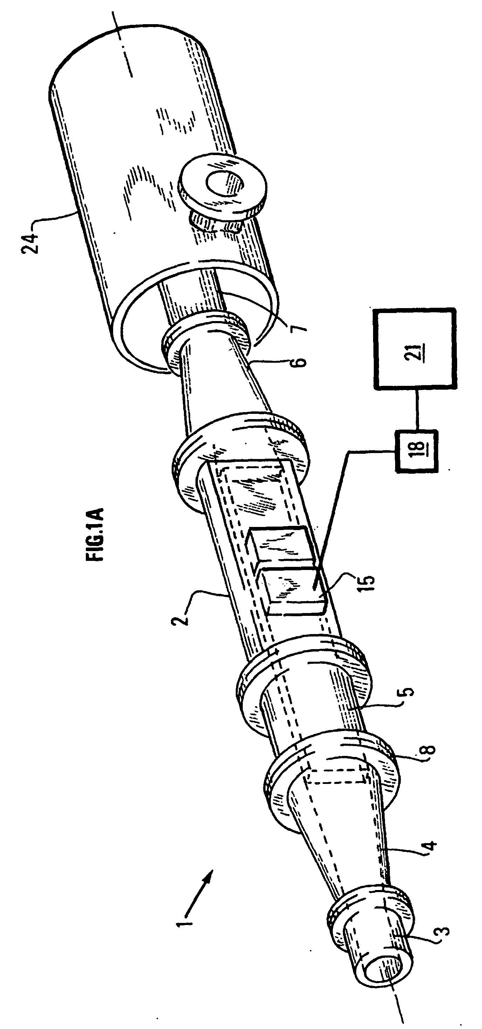

Le dispositif représenté sur les figures 1A et 1B comprend une veine de mesure 1 dans laquelle circule le fluide polyphasique, par exemple un effluent pétrolier comportant de l'eau ou de la saumure, de l'huile et du gaz. La veine 1 comporte plusieurs éléments reliés les uns aux autres dont un élément de mesure 2 de forme rectangulaire équipés des dispositifs nécessaires pour la mesure décrite ci-après. L'effluent arrive par une conduite 3, passe à travers un premier élément d'adaptation 4 ayant une forme adaptée pour que le passage de l'écoulement d'une section cylindrique à une section rectangulaire s'effectue avec un minimum de perturbations et par un élément de tranquilisation 5 qui amortit les turbulences éventuelles générées lors de cette transformation. Le passage entre l'élément de mesure 2 et une conduite d'évacuation 7 de l'effluent s'effectue par l'intermédiaire d'un second élément d'adaptation 6 ayant pour rôle d'adapter l'écoulement sortant de l'élément de mesure 2 à la géométrie de la conduite d'évacuation 7 de l'effluent. Les différents éléments 2, 3, 4, 5, 6 et 7 sont reliés entre eux, par exemple, par des brides 8, habituellement utilisées dans le domaine pétrolier, ayant pour fonction principale d'assurer l'étanchéité entre les différents éléments.

Avantageusement, la forme rectangulaire de l'élément de mesure 2 tend à stratifier la plupart des fluides polyphasiques en circulation, de tels écoulements se présentent alors sous la forme de plusieurs couches constituées chacune d'une des phases du fluide. Un tel faciès d'écoulement facilite les mesures et ainsi la réalisation de sa cartographie.

Avantageusement, l'élément de mesure 2 est équipé de capteurs, tels que des capteurs de température Ct et de pression Cp situés, par exemple, à l'entrée de la veine de mesure. Ces capteurs mesurent les conditions thermodynamiques dans lesquelles on acquiert les données pour effectuer, éventuellement, des corrections d'erreurs.

Le dispositif représenté à la figure 1B comporte une chaîne de mesure C₁ ayant pour but de qualifier et de quantifier les différentes phases constituant l'effluent polyphasique, c'est-à-dire de connaître leur nature et leur proportion.

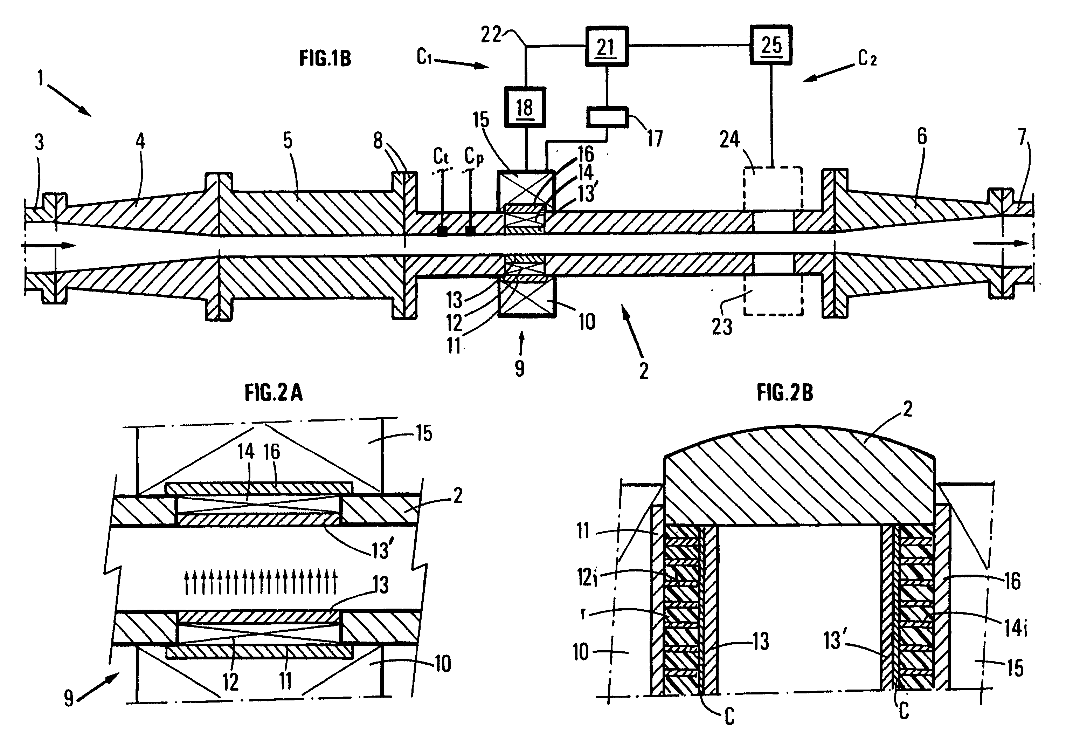

Elle comporte, par exemple :
- un bloc émetteur 9 d'un champ électromagnétique, tel qu'un faisceau de micro-ondes, solidaire de l'élément de mesure 2 comprenant, par exemple, une source de micro-ondes 10, un dispositif 11 dont le rôle est de transmettre à une antenne d'émission 12, (Fig.2A et 2B ) composée par exemple par plusieurs éléments 12i, un faisceau équi-amplitude et équi-phase de façon que tous les éléments 12i de l'antenne 12 rayonnent un champ sensiblement uniforme et homogène, une fenêtre transparente aux micro-ondes 13 située sensiblement dans l'alignement de l'antenne émettrice 12 . Le faisceau de micro-ondes généré par la source 10 est transmis à l'effluent polyphasique à travers la fenêtre 13 et traverse ensuite le fluide pétrolier dans lequel il est au moins en partie diffracté par les hétérogénéités contenues dans celui-ci. Un bloc de réception 15 positionné après une fenêtre 13', de type identique à la fenêtre 13, reçoit le champ résultant du champ initial ayant traversé l'effluent sans perturbation et de la partie du champ diffracté par les impuretés ou hétérogénéités incluses dans l'effluent. Ce bloc de réception comporte par exemple une antenne de réception 14 comprenant par exemple plusieurs éléments d'antennes 14i (Figs 2A et 2B) et un dispositif 16 situé en aval de l'antenne 14 ayant notamment pour fonction de délivrer un signal représentatif du champ électromagnétique résultant reçu par chaque élément d'antenne 14i.

Les antennes d'émission 12 et de réception 14 sont, par exemple, reliées respectivement aux dispositifs 11 et 16 par des guides d'ondes cylindriques semi-rigides par exemple, fonctionnant dans une gamme de fréquence pouvant aller de 1 à 10 GHz, de préférence de 2 à 8 GHz.

Le dispositif 16 est relié à un multiplexeur 17 qui commande des commutateurs (non représentés) inclus dans le dispositif 16 pour scruter les différents éléments d'antennes 14i et à un ensemble de démodulation 18 de type connu adapté à délivrer des signaux Basse fréquence à un dispositif de traitement et de commande 21 relié à l'ensemble de démodulation par des liaisons électriques classiques 22. La fréquence de scrutation des différents éléments d'antenne 14i donnée par le dispositif 21, est choisie de préférence pour être suffisamment rapide devant la vitesse d'écoulement de l'effluent polyphasique.

Le dispositif de traitement et de commande 21 peut être relié au module 18 par une liaison opto-couplée.

Ce dispositif 21 est, par exemple un micro-contrôleur ayant notamment pour fonction de recevoir les données et de les traiter. Il gère aussi les séquences de déroulement de la méthode selon l'invention, notamment, en pilotant la plupart des dispositifs décrits précédemment et la source d'émission de micro-onde.

De manière avantageuse, le dispositif de démodulation 18 peut comporter un sous ensemble de détection synchrone afin d'améliorer le rapport signal/bruit. Dans ce cas, le multiplexeur 17 peut comporter un générateur interne qui délivre le signal permettant de moduler le signal utile.

On réalise les fenêtres 13 et 13' de préférence dans un matériau présentant un faible coefficient d'atténuation pour les fréquences utilisées, et apte à protéger les antennes de tout type d'agressions, notamment les agressions chimiques du fluide pétrolier. La fenêtre transparente 13 peut être réalisée en PVDF qui résiste bien, par exemple au méthane et H₂S.

Il est possible de relier le micro-contrôleur 21 aux autres éléments à l'aide d'un câble souple dont les caractéristiques électriques et physiques sont telles qu'elles permettent de déporter l'ensemble de traitement par rapport à la veine de mesure. De cette manière il est aisé de présenter l'image de la distribution des phases à un utilisateur sur l'écran du micro-contrôleur.

Un exemple de commande des circuits électroniques et informatiques décrits en relation avec les figures 1B, 2B et 3 comporte par exemple les étapes suivantes :
- le micro-contrôleur 21 déclenche les opérations en envoyant :
   - un ordre d'émission à la source d'émission 10 de micro-ondes qui génère alors un faisceau de micro-ondes ayant une fréquence Fe aux différents éléments 12i de l'antenne émettrice 12 de manière simultanée, et
   - immédiatement après, il délivre un signal au multiplexeur 17 à une fréquence choisie, par exemple égale à 200 KHz, pour activer les commutateurs du dispositif 16 de manière à scruter les éléments 14i de l'antenne réceptrice,
   - l'ensemble de démodulation 18, reçoit aussi un signal de référence provenant de la source d'émission.

A partir du signal de référence et des signaux reçus par les éléments 14i de l'antenne réceptrice 14, l'ensemble de démodulation 18 génère deux signaux Basse Fréquence correspondant respectivement à l'amplitude Aei du champ diffracté reçu par un élément d'antenne 14i et à la valeur du déphasage PHei du champ diffracté reçu par ce même élément. Ces valeurs sont données pour une valeur de fréquence Fe de la source de micro-ondes.

Chaque élément de l'antenne 14i est repéré, par exemple, selon la hauteur de la veine de mesure par une côte Pi, prise par exemple par rapport à la partie inférieure de la veine de mesure, à laquelle est associé un couple de valeurs Aei et PHei du champ diffracté, donc à la nature et à la quantité de la phase correspondant à cette côte.

Les deux signaux Aei et PHei représentatifs du champ diffracté reçus par un élément d'antenne 14i sont ensuite transmis au micro-contrôleur et mémorisés dans ce dernier, par exemple, sous forme d'une table de données comprenant des couples de valeurs, [(Aei, PHei, Pi) Fe] où Fe est la fréquence d'émission.

Afin d'améliorer la précision des mesures, on mesure les valeurs d'amplitude et de déphasage pour plusieurs valeurs de fréquence Fe. Dans ce cas, à la fin d'un cycle de mesures effectuées à une fréquence Fe de la manière décrite précédemment, le micro-contrôleur fixe la valeur de fréquence à une nouvelle valeur Fe+1 et recommence un cycle d'acquisition et de mesure et de mémorisation des nouvelles données A(e+1)i, PH(e+1)i, pour tous les éléments d'antennes 14i de côte Pi.

Des essais ont permis de préciser des bandes de fréquence préférentielles permettant d'optimiser la discrimination des trois phases, gaz, huile et eau.

Ainsi, on travaillera de préférence dans les quatre bandes de fréquence suivantes :
- Bande F₁ = 2,1 GHz à 2,4 GHz,
- Bande F₂ = 2,6 Gaz à 3,15 GHz,
- Bande F₃ = 3,7 GHz à 4 GHz,
- Bande F₄ = 6,1 GHz à 6,3 GHz,

A l'intérieur de ces quatre bandes de fréquences, on choisit de préférence les quatre valeurs :
F₁ au voisinage de 2,6 GHz , F₂≃3 GHz, F₃≃3,8 GHz et F₄≃6,1 GHz.

Les valeurs de fréquence sélectionnées ci-dessus permettent notamment :
- d'obtenir une réponse de l'antenne réceptrice sensiblement uniforme en amplitude et en phase, lorsque la conduite est remplie pratiquement en totalité par l'une des trois phases,
- la fréquence choisie sensiblement égale à 2,6 GHz convient particulièrement bien pour les fluides ayant une valeur de salinité élevée. L'atténuation du signal étant importante dans de tels effluents, il est préférable de minimiser le bruit en travaillant avec de faibles fréquences,
- la fréquence F₁ offre de plus l'avantage de permettre la discrimination en amplitude des deux phases gaz et huile,
- les fréquences F₂, F₃ et F₄ permettent d'obtenir une réponse homogène pour toutes les phases.

Les données peuvent se présenter, par exemple, sous la forme de matrices de points numérisés.

A l'aide d'un logiciel approprié qui tient compte, notamment des valeurs de la température et de la pression mesurées par les capteurs Cp et Ct, le micro-contrôleur traite les données et en déduit la proportion de chaque phase présente dans l'effluent, cette proportion pouvant être déterminée pour un endroit ou une zone de la veine, cet endroit ou zone de la veine pouvant être une tranche ayant une hauteur sensiblement égale à la largeur d'un élément d'antenne 14i et une largeur sensiblement égale à la profondeur de la veine. Ce traitement peut s'effectuer de différentes manières dont celles décrites ci-après.
* Le traitement peut comporter une étape au cours de laquelle, à partir des tables de données obtenues précédemment mémorisées et à partir de tables obtenues au cours d'essais préalables, il effectue une comparaison entre les données mesurées et ces tables obtenues préalablement pour en déduire la nature et la quantité d'une phase correspondant à une cote Pi.
* Dans un autre exemple de réalisation, le traitement fait apppel à des valeurs de seuil déterminées par exemple à partir d'histogrammes mesurés et à une loi de comportement des variations de l'amplitude et de la phase du signal obtenu en fonction de la fréquence, pour en déduire la nature de chaque phase et leur proportion.

Les valeurs des seuils pour l'amplitude et la phase sont calculés à 10% et 90% de l'intégrale des listogrammes réalisés dans les essais.
* Il peut mettre aussi en oeuvre une méthode de classification des donnée faisant appel aux réseaux de neurones.
* une image de la répartition des phases peut être obtenue à partir de l'analyse du signal reçu par tous les éléments 14i de l'antenne de réception pour obtenir une information sur la répartition des phases dans la direction de propagation de l'onde, ce qui correspond à déterminer la répartition des phases selon la profondeur de la veine de mesure, et aussi sur la hauteur de la veine. On analyse l'amplitude et la phase de tous les signaux reçus et on fait appel, par exemple, à des algorithmes de tomographie.
* Des essais réalisés sur un effluent pétrolier comportent une phase huile, de l'eau et du gaz, ayant une structure d'écoulement de type stratifié, c'est-à-dire que les différentes phases se présentent sous forme de strates dans la conduite disposées selon leur densité, ont permis d'obtenir les valeurs des seuils haut et bas pour déterminer l'amplitude et la phase regroupées dans le tableau ci-après.

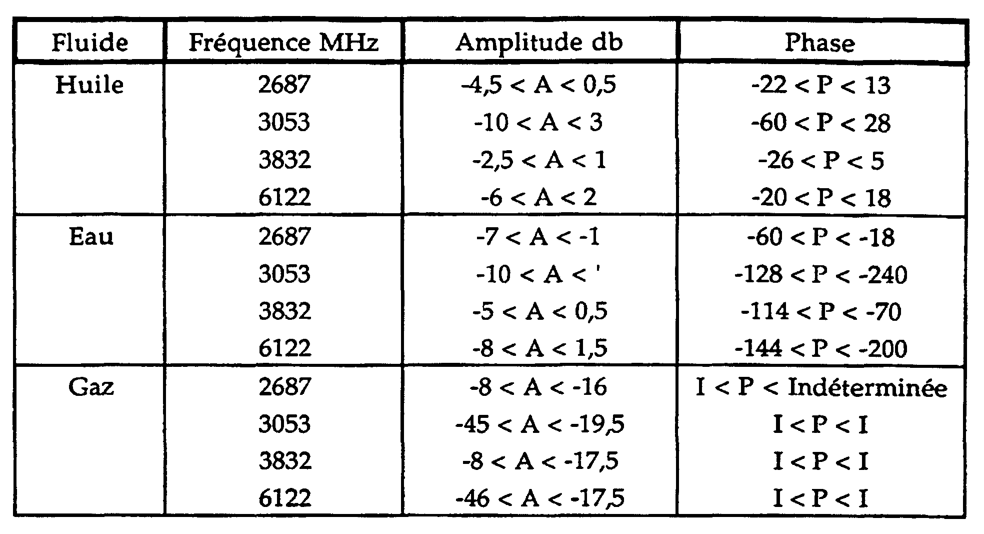

Les données préalablement mémorisées peuvent avoir été obtenues à partir d'un fluide de composition connue et dans des conditions de pression et de température données.

De manière avantageuse et sans sortir du cadre de l'invention, il est possible d'améliorer la précision des mesures, par exemple, en procédant de la manière suivantes : on active un élément de l'antenne d'émission 12i et on scrute simultanément l'élément de l'antenne de réception 14i correspondant. On balaye ainsi tous les couples ( 12i, 14i) des éléments d'antennes émettrices et réceptrices.

On peut aussi procéder de la manière suivante: on active un élément de l'antenne d'émission 12i qui rayonne alors le champ électromagnétique, et on scrute tout ou en partie les éléments 14i de l'antenne réceptrice pour mesurer le signal diffracté. On peut scruter tous les éléments d'antennes 14i en une seule fois ou encore individuellement les uns après les autres.

De telles mesures apportent des informations supplémentaires représentatives du phénomène physique qui permettent, par exemple en faisant appel à des algorithmes de traitement appropriés de déterminer de manière plus précise la quantité de chacune des phases obtenues, par exemple par imagerie.

Les figures 2A et 2B montrent en détail les antennes utilisées dans le dispositif selon l'invention et leur disposition par rapport à la veine de mesure. La conception de ces antennes ainsi que le choix du matériau dans lequel elles sont réalisées permettent leur fonctionnement dans une large gamme de fréquence de préférence, entre 2 et 8 GHz.

Elles sont adaptées pour un effluent pétrolier de valeur de permittivité relative variable, par exemple, entre 1 et 300 et de préférence entre 1 et 100.

Les antennes 12 et 14 schématisées sur les figures 2A et 2B comportent, par exemple, 32 éléments 12i, et 32 éléments 14i positionnés les uns à côté des autres et séparés par un matériau r, tel qu'une résine époxy, servant à adapter ces éléments entre eux et à assurer leur tenue pour des valeurs de pression relativement élevées, par exemple supérieures à 100 bars et à des températures pouvant être au moins égales à 100°C. La valeur de permittivité relative de cette résine peut être sensiblement égale à 4 et peut être une résine du commerce de type CW 1991 BO/HY 2954BD commercialisée par CIBA.

La surface rayonnante de l'antenne d'émission 12 est appliquée contre la fenêtre transparente aux micro-ondes et rayonne à partir de tousses éléments d'antennes 12i, un champ micro-onde homogène et sensiblement uniforme sur la majorité de la surface d'émission.

On peut placer entre l'antenne d'émission 12 et la fenêtre 13 un matériau c, tel qu'une céramique, choisie pour optimiser la transmission en énergie et en phase du faisceau de micro-ondes pouvant varier, par exemple, entre 2 et 8 GHz et assurer ainsi une pénétration maximale de ce dernier dans l'effluent pétrolier .

De manière avantageuse, la céramique a une valeur de permittivité relative sensiblement égale à 30, choisie en fonction des valeurs maximum et minimum de la permittivité relative de l'effluent pétrolier.

Dans un autre mode de réalisation, non représenté, les antennes 12 et 14 sont constituées, par exemple, d'une rétine linéaire telle que celle décrite dans le brevet FR-2.635.187 de la société SATIMO. Cette rétine est solidaire d'une antenne plate de type microstrip dont le matériau est choisi en fonction des critères précédemment énoncés pour les antennes multiéléments.

Les antennes multiéléments 12 et 14 schématisés aux figures 2A et 2B offrent une sensibilité supérieure par rapport aux antennes comportant une rétine linéaire précédemment mentionnée. Le pas ou distance entre les éléments 12i et 14i des antennes d'émission et de réception est fixé, par exemple, en fonction de la résolution spatiale recherché pour le dispositif, c'est-à-dire la distance entre les points de mesure du champ diffracté par les hétérogénéités.

Dans un autre mode de réalisation, le dispositif selon l'invention permet de déterminer la vitesse d'écoulement pour chaque phase circulant dans la conduite.

Une chaîne de mesure C₂ ( Fig.1B) adaptée pour la mesure de vitesse, peut compléter de façon avantageuse le dispositif de mesure. Elle est, par exemple située en aval de la chaîne de mesure de quantification des phases C₁.

Elle comprend, par exemple, un dispositif 23 d'émission d'un rayonnement, un dispositif de réception 24 de l'onde ayant traversé l'effluent polyphasique, ce dispositif de réception 24 étant relié à un dispositif de traitement de signal 25 qui est lui-même relié au micro-contrôleur 21. Les éléments sont reliés par des liaisons électriques identiques aux liaisons 22.

Les dispositifs de réception 24 et de traitement des signaux 25 sont par exemple similaires aux dispositifs décrits dans la demande de brevet du demandeur FR-94/08380 qui permet de réaliser un champ de vitesse pour un effluent polyphasique en circulation dans une conduite, par exemple sur une hauteur de la veine de mesure.

Une autre façon de procéder consiste, à l'aide d'un dispositif approprié, à mesurer la vitesse par effet Doppler comme il est connu des spécialistes.

Le dispositif d'émission du rayonnement peut comporter une source d'émission d'ondes électromagnétique, telles que des micro-ondes, ou des ondes de pression telles des ondes acoustiques.

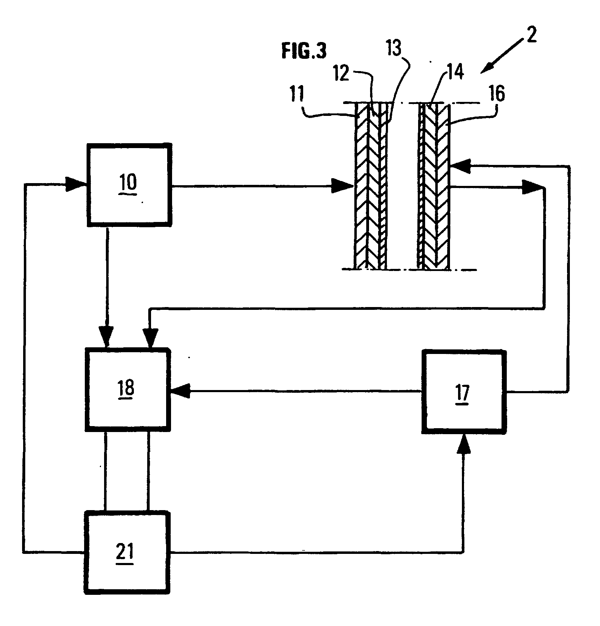

Une telle chaîne de mesure C₂ permet de déterminer de manière ponctuelle la valeur de la vitesse associée à un point de la conduite. Cette information est ensuite transmise au micro-contrôleur qui l'intègre au niveau du traitement de signal de manière à associer une valeur de vitesse à une phase dont la nature a été caractérisée en suivant, par exemple, les étapes de la méthode décrites en relation aux figures 1A, 1B et 3. A partir de la valeur de la vitesse et de la nature de la phase on détermine, à l'aide d'un module logiciel approprié, le débit associé à une phase de l'effluent polyphasique et ceci en plusieurs points de la conduite.

Une mesure de densité associée permet de remonter à la valeur du débit massique de chacune des phases.

Selon un mode avantageux de l'invention, on effectue une mesure de vitesse pour chacune des phases de l'effluent pétrolier de façon à obtenir une valeur précise de débit pour chacune d'elles.

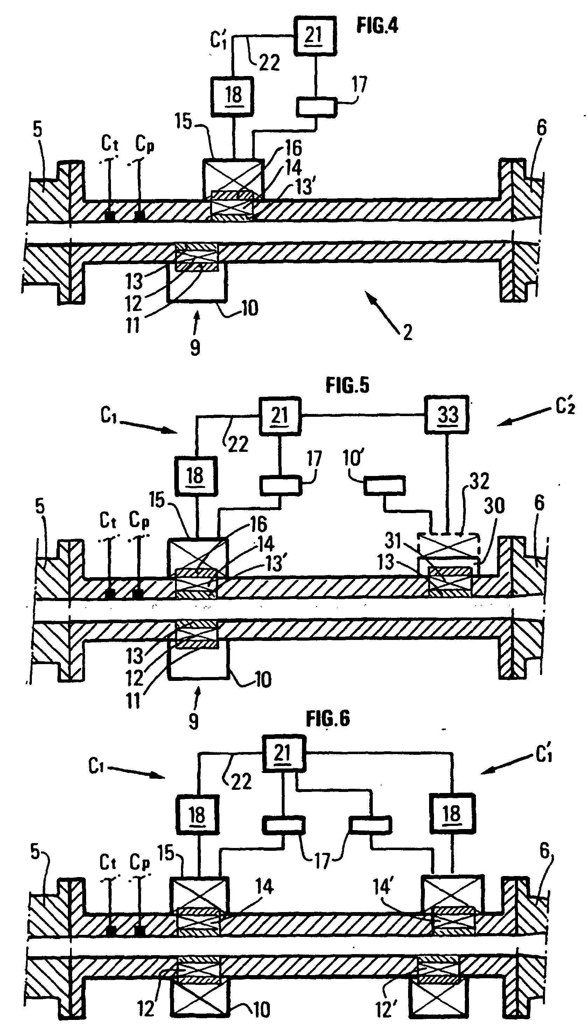

Selon un mode de réalisation préférentiel décrit en relation à la figure 4, on utilise une chaîne de mesure unique pour réaliser la cartographie de la répartition des phases d'un effluent en circulation dans la veine de mesure et simultanément une mesure de vitesse par effet Doppler en transmission pour chaque phase.

Le dispositif décrit à la figure 4 diffère du dispositif de la figure 1B, notamment par la disposition et l'agencement des éléments de la chaîne de mesure C₁ de la figure 1B. En effet, la partie émettrice de la chaîne C'₁ comprenant tous les éléments (9, 10, 11, 12 et 13) nécessaires à l'émission d'un faisceau de micro-ondes est positionnée d'un côté de la veine de mesure et la partie comprenant les éléments nécessaires à la réception des signaux (13', 14, 15 et 16) est située de l'autre côté de la veine de mesure et décalée par rapport à la partie émettrice pour obtenir un signal Doppler. Le multiplexeur 17 et le démodulateur 18 sont reliés au micro-contrôleur 21 de manière similaire à celle décrite en relation avec la figure 1B, par des liaisons 22.

Une manière de réaliser la cartographie et la mesure de la vitesse de chacune des phases d'un effluent polyphasique diffère d'une des façons de procéder décrites ci-dessus pour le traitement du signal.

Le micro-contrôleur 21 effectue une étape supplémentaire de traitement des signaux provenant du démodulateur 18 en réalisant une analyse spectrale des signaux bien connu des spécialistes du domaine, telle qu'un spectre Doppler pour déterminer la vitesse de chacune des phases, eau, huile et gaz à partir du profil des vitesses obtenu sur la hauteur de la veine de mesure. Connaissant la nature et la quantité d'une phase pour un endroit de la section de la conduite et la vitesse associée à cette phase, il est possible à l'aide d'un logiciel approprié de déterminer le débit pour chacune des phases de l'effluent ceci en plusieurs endroits, ou zones de la conduite.

Ce mode de réalisation est particulièrement avantageux du fait qu'il utilise un module ou chaîne de mesure unique pour déterminer la quantité et la vitesse d'une phase, et en déduire son débit.

Un autre mode de réalisation décrit à la figure 5 consiste à utiliser l'effet Doppler en réflexion pour réaliser un profil de vitesse de l'effluent polyphasique, en utilisant une seconde chaîne de mesure C'₂ positionnée, par exemple, en aval de la première chaîne de mesure C₁ ( fig.1B).

La chaîne de mesure C₂ comprend des moyens d'émission et de réception 31, par exemple une antenne de structure et de nature identiques aux antennes décrites en relation avec les figures 1B, 2A et 2B, cette antenne multiéléments 31 présentant l'avantage de pouvoir fonctionner aussi bien en émission qu'en réception.

Dans ce cas, l'effet Doppler est obtenu en inclinant l'antenne émettrice-réceptrice 31 d'un angle donné, par exemple de l'ordre de 30° par rapport à la paroi de la veine de mesure 2.

Une seconde source d'émission 10' est reliée à l'antenne d'émission-réception 31 par l'intermédiaire d'un multiplexeur 30 et d'un dispositif 32, tel qu'un circulateur ayant notamment pour rôle de transmettre en permanence, par exemple, le signal micro-onde provenant de la source d'émission 10' vers un élément 31i de l'antenne d'émission-réception 31 et d'aiguiller les signaux rétrodiffusés reçus par un élément de cette antenne vers les circuits de détection et de traitement 33.

Le micro-contrôleur 21 gère, par exemple de manière séquentielle, la chaîne de mesure de la quantité de chacune des phases, ou cartographie C₁, et de mesure des vitesses ou du champ de vitesse C'₂. Il commande en particulier au niveau de la chaîne de mesure C'₂, les instants d'émission des micro-ondes et le multiplexage des éléments 31i de l'antenne émission-réception 31.

Il effectue également une analyse spectrale des signaux issus du module de traitement 33 pour déterminer un profil de vitesse sur la hauteur de la conduite et obtenir ainsi la valeur de la vitesse associée à une phase de l'effluent polyphasique. Un logiciel approprié permet, par exemple, à partir du spectre Doppler, de définir la fréquence Doppler directement proportionnel à la vitesse de l'effluent polyphasique pétrolier.

Le dispositif décrit en relation sur la figure 6 rassemble sur l'élément de mesure 2, deux chaînes de mesure de type C₁ (Fig. 1B) indicées respectivement C₁ et C''₁ sur la figure. La première chaîne C₁ est destinée à réaliser une cartographie du fluide polyphasique de manière identique à la figure 1B. L'antenne de réception 14' de la seconde chaîne C'₁ est décalée selon l'axe de la veine de mesure par rapport à l'antenne d'émission 12' de manière à réaliser une mesure de vitesse ou un profil de vitesse du fluide polyphasique. Les deux chaînes de mesure sont situées suffisamment proches l'une de l'autre pour obtenir des mesures représentatives de la quantité d'une phase et de sa vitesse associée. La mise en oeuvre de cette variante de dispositif est identique à celle décrite en relation avec la figure 6, à l'exception du traitement de signal reçu par la seconde chaîne qui met en jeu l'effet Doppler en transmission.

Les dispositifs d'émission, de réception, le démodulateur, le multiplexeur et le micro-contrôleur sont identiques aux dispositifs de la figure 1B.

Sans sortir du cadre de l'invention, l'élément de mesure 2 peut être équipé de deux chaînes de type C₁, séparées d'une distance d (non représenté sur les figures).

La première chaîne réalise une cartographie de l'écoulement à un instant donné t et la seconde chaîne une cartographie de l'écoulement à un instant t+δt, δt étant fonction de la vitesse de l'écoulement et de la distance d. Une méthode classique d'intercorrélation des signaux reçus par les éléments d'antennes de la première chaîne de mesure et ceux de la seconde chaîne de mesure, permet de remonter à la vitesse et à la proportion de chacune des phases de l'effluent.

L'élément de mesure 2 est avantageusement muni d'une enveloppe protectrice étanche, telle qu'un tube 24, protégeant l'élément des agressions extérieures et qui rend de plus le dispositif conforme aux normes de sécurité de l'industrie pétrolière.

La veine de mesure 1 est de préférence réalisée dans un matériau inattaquable par l'effluent pétrolier, notamment un matériau non corrodable au H2S. Elle peut comporter un matériau absorbant les hautes fréquences, non représenté sur les figures, situé dans sa partie inférieure et/ou dans sa partie supérieure qui permet de minimiser les rayonnements parasites de bord d'antenne et ainsi d'augmenter la précision des mesures et de la qualité de l'image numérisée de la partie inférieure et de la partie supérieure de la veine, l'image étant obtenue à partir des données du tableau.

On ne sortira pas du cadre de l'invention en remplaçant la source variable en fréquence par une pluralité de sources émettant à des fréquences de micro-ondes déterminées et reliées au micro-contrôleur par un dispositif approprié permettant le passage d'une fréquence à une autre en quelques micro-secondes.

## Revendications

1. Méthode permettant de déterminer la proportion d'au moins une phase constituant une partie d'un milieu polyphasique comportant au moins une phase liquide et au moins une phase gazeuse, lesdites phases présentant une permittivité permettant de les discriminer, ladite methode comportant au moins un cycle de mesure défini par les étapes suivantes:
a) -on irradie le milieu polyphasique avec un faisceau d'ondes électromagnétiques provenant d'une première source d'émission, ledit faisceau ayant une valeur de fréquence (fe),
b) -on mesure la valeur de l'amplitude (Aei) et le déphasage (Phei) du faisceau d'ondes électromagnétiques ayant traversé ledit milieu, en au moins une zone fixée par rapport au milieu polyphasique ,
c) -on fait varier la valeur de fréquence du faisceau d'ondes électromagnétiques de (fe) à une fréquence (fe+1), et on réitère les étapes a) et b)
d) -on détermine la proportion de chacune des phases liquides et/ou gaz pour au moins une zone en comparant les mesures obtenues aux étapes b) et c) avec des données préalablement mémorisées dans un moyen de traitement, en tenant compte de la valeur de fréquence associée.

2. Méthode selon la revendication 1, dans laquelle les données préalablement mémorisées sont les mesures d'amplitude et de déphasage d'un faisceau d'ondes électromagnétiques ayant traversé un fluide de composition connue.

3. Méthode selon l'une des revendications précédentes, dans laquelle ledit milieu est en écoulement et dans laquelle avant l'étape a), on amorti les turbulences de l'écoulement pour que les phases se présentent sous forme de strates disposées selon la densité desdites phases.

4. Méthode selon la revendication 1, dans laquelle le milieu polyphasique étant en écoulement dans une conduite de section donnée, on réalise une ou plusieurs fois le cycle de mesure comportant les étapes a) à d) et en plusieurs points, et on en déduit la répartition et la proportion d'au moins une phase pour une section de la conduite définie par la direction du faisceau de micro-ondes et un des côtés de la conduite ayant une direction non parallèle à la direction de propagation du faisceau d'ondes électromagnétiques.

5. Méthode selon la revendication 1, dans laquelle on utilise une antenne d'émission (12) constituée de plusieurs éléments (12i) et une antenne de réception (14) comportant plusieurs éléments (14i) et on réalise l'étape a) en irradiant le milieu à partir de tous les éléments (12i) de l'antenne d'émission (12), puis on effectue l'étape b) en scrutant tous les éléments (14i) de l'antenne de réception (14) les unes après les autres.

6. Méthode selon la revendication 1, dans laquelle on utilise une antenne d'émission constituée de plusieurs éléments (12i) et une antenne de réception comportant plusieurs éléments (14i) et on réalise l'étape a) en irradiant le milieu à partir d'un élément (12i) de l'antenne d'émission (12), puis on réalise l'étape b) en scrutant l'élément (14i) correspondant de l'antenne de réception (14), et on réitère cette opération pour tous les éléments d'antennes (12i) et (14i).

7. Méthode selon la revendication 1, dans laquelle on utilise une antenne d'émission constituée de plusieurs éléments (12i) et une antenne de réception comportant plusieurs éléments (14i) et on effectue l'étape a) en irradiant le milieu à partir d'un élément (12i) de l'antenne d'émission (12), puis on effectue l'étape b) en scrutant tous les éléments (14i) de l'antenne de réception (14) les uns après les autres.

8. Méthode selon la revendication 2, dans laquelle ledit fluide de composition connue est un fluide polyphasique dont la nature et la proportion des phases est connue.

9. Méthode selon la revendication 1, dans laquelle on irradie le milieu polyphasique avec un faisceau d'ondes électromagnétiques ayant une valeur de fréquence comprise entre 2 et 8 GHz.

10. Méthode selon la revendication 4, dans laquelle on mesure la vitesse d'au moins une phase, telle la phase liquide et/ou la phase gazeuse et/ou la phase solide, contenue dans le milieu polyphasique par effet Doppler en irradiant le milieu avec un faisceau d'ondes électromagnétiques et/ou d'une onde ultrasonore et on détermine le débit de la ou de chacune des phases.

11. Dispositif pour déterminer la proportion d'au moins une phase contenue dans un milieu polyphasique, ledit milieu polyphasique étant constitué d'au moins une phase liquide et d'au moins une phase gazeuse, comportant en combinaison au moins une conduite pour la circulation dudit milieu, ayant une section connue et des fenêtres transparentes aux ondes électromagnétiques, un moyen d'émission d'au moins deux faisceaux d'ondes électromagnétiques (10, 12), les dieux faisceaux étant de fréquence différente, au moins un moyen de réception des faisceaux d'ondes électromagnétiques ayant traversé ledit milieu polyphasique (14), les moyens d'émission et de réception étant situés dans l'alignement des fenêtres, et un moyen (21) de traitement et de commande permettant de déterminer le taux d'occupation de la phase liquide et/ou de la phase gazeuse pour une section donnée de la conduite par comparaison des mesures d'amplitude et de déphasage desdits deux faisceaux d'ondes électromagnétiques ayant traversé le milieu polyphasique avec des données préalablement mémorisées, en tenant compte des fréquences desdits faisceau d'ondes électromagnétiques.

12. Dispositif selon la revendication 11, dans lequel la conduite est munie d'un élément de tranquilisation pour favoriser un écoulement stratifié desdites phases.

13. Dispositif selon l'une des revendications 11 et 12, dans lequel les moyens d'émission (12) et de réception (14) sont des antennes large bande comprenant plusieurs éléments, lesdits éléments étant séparés les uns des autres par un premier matériau (r) et dans lequel le dispositif comporte un second matériau (c) situé entre lesdites antennes (12, 14) et lesdites fenêtres transparentes (13, 13') aux ondes électromagnétiques de la conduite, lesdits premiers et second matériaux ayant des caractéristiques diélectriques permettant d'adapter lesdites antennes à une variation de permittivité relative du milieu polyphasique.

14. Dispositif selon la revendication 13, dans lequel ledit premier matériau est une résine époxy et le second matériau une céramique adaptés à résister à des valeurs de température (T) et de pression (P) élevées, respectivement supérieures à 100°C et 100 bars.

15. Dispositif selon la revendication 11, comportant un dispositif permettant de mesurer la vitesse d'au moins une phase du milieu polyphasique.

16. Application de la méthode selon l'une des revendications 1 à 10 et du dispositif selon l'une des revendications 11 à 15 à la détermination de la proportion des phases constituant un effluent pétrolier.

## Patentansprüche

1. Verfahren, das es ermöglicht, den Anteil von wenigstens einer Phase zu bestimmen, die einen Teil eines polyphasischen Milieus bildet, das wenigstens eine flüssige Phase und wenigstens eine Gasphase umfasst, wobei die Phasen eine Durchlässigkeit aufweisen, die es ermöglicht, sie zu unterscheiden, wobei das Verfahren wenigstens einen Messzyklus umfasst, der durch die folgenden Schritte definiert ist:
a) man bestrahlt das polyphasische Milieu mit einem Bündel elektromagnetischer Wellen, die von einer ersten Sendequelle kommen, wobei das Bündel einen Frequenzwert (fe) hat,
b) man misst den Wert der Amplitude (Aei) und die Phasenversetzung (Phei) des Bündels elektromagnetischer Wellen, welches das Milieu durchquert hat, an wenigstens einer Zone, die bezüglich des polyphasischen Milieus fixiert ist,
c) man lässt den Frequenzwert des Bündels elektromagnetischer Wellen von (fe) zu einer Frequenz (fe+1) variieren und man wiederholt mehrfach die Schritte a) und b),
d) man bestimmt den Anteil jeder der Flüssig- und/oder Gasphasen für wenigstens eine Zone, indem man die bei den Stufen b) und c) erhaltenen Messungen mit den Daten vergleicht, die vorher in einem Bearbeitungsmittel gespeichert sind, unter Berücksichtigung des zugeordneten Frequenzwerts.

2. Verfahren nach Anspruch 1, in dem die vorher gespeicherten Daten Amplituden- und Phasenversetzungsmessungen eines Bündels elektromagnetischer Wellen sind, das ein Fluid bekannter Zusammensetzung durchquert hat.

3. Verfahren nach einem der vorhergehenden Ansprüche, in welchem das Medium im Fluss ist und in welchem man vor dem Schritt a) die Strömungsturbulenzen dämpft, damit die Phasen in Form von Schichten, die gemäß der Dichte der Phasen angeordnet sind, vorliegen.

4. Verfahren nach Anspruch 1, in dem das polyphasische Milieu im Fluss in einer Leitung vorgegebenen Querschnitts ist, man ein oder mehrmals den Messzyklus durchführt, der die Schritte a) bis d) umfasst und an mehreren Punkten, und man davon die Verteilung und den Anteil wenigstens einer Phase für einen durch die Richtung des Bündels von Mikrowellen und eine der Seiten der Leitung definierten Abschnitt der Leitung ableitet, der eine Richtung hat, die nicht parallel zur Fortpflanzungsrichtung des Bündels elektromagnetischer Wellen ist.

5. Verfahren nach Anspruch 1, in dem man eine Sendeantenne (12) verwendet, die aus mehreren Elementen (12i) besteht und eine Empfangsantenne (14), die aus mehreren Elementen (14i) besteht und man den Schritt a) durchführt, indem man das Milieu von allen Elementen (12i) der Sendeantenne (12) aus bestrahlt und dann den Schritt b) durchführt, indem man alle Elemente (14i) der Empfangsantenne (14) nacheinander absucht.

6. Verfahren nach Anspruch 1, in dem man eine Sendeantenne verwendet, die aus mehrere Elementen (12i) besteht, und eine Empfangsantenne, die aus mehreren Elementen (14i) besteht und man den Schritt a) durchführt, indem man das Milieu von einem Element (12i) der Sendeantenne (12) aus bestrahlt und dann den Schritt b) durchführt, indem man das korrespondierende Element (14i) der Empfangsantenne (14) absucht, und man wiederholt diesen Schritt für jedes der Antennenelemente (12i) und (14i).

7. Verfahren nach Anspruch 1, in dem man eine Sendeantenne verwendet, die aus mehreren Elementen (12i) besteht, und eine Empfangsantenne, die aus mehreren Elementen (14i) besteht und man den Schritt a) durchführt, indem man das Milieu von einem Element (12i) der Sendeantenne (12) aus bestrahlt und dann den Schritt b) durchführt, indem man alle Elemente (14i) der Empfangsantenne (14) nacheinander absucht.

8. Verfahren nach Anspruch 2, in dem das Fluid bekannter Zusammensetzung ein polyphasisches Fluid ist, von dem die Natur und der Anteil der Phasen bekannt ist.

9. Verfahren nach Anspruch 1, in dem man das polyphasische Milieu mit einem Bündel elektromagnetischer Wellen mit einem Frequenzwert zwischen 2 und 8 GHz bestrahlt.

10. Verfahren nach Anspruch 4, in dem man die Geschwindigkeit wenigstens einer Phase wie der Flüssig- und/oder Gasphase und/oder der festen Phase misst, die in dem polyphasischen Milieu enthalten ist, durch Doppler-Effekt, indem man das Milieu mit einem Bündel elektromagnetischer Wellen und/oder einer Ultraschallwelle bestrahlt und man den Durchsatz von der oder von jeder der Phasen bestimmt.

11. Vorrichtung zur Bestimmung des Anteils von wenigstens einer Phase, die in einem polyphasischen Milieu enthalten ist, wobei das polyphasische Milieu aus wenigstens einer flüssigen Phase und wenigstens einer Gasphase gebildet ist, welche in Kombination wenigstens eine Leitung zum Umlauf des Milieus, die einen bekannten Abschnitt und für die elektromagnetischen Wellen transparente Fenster hat, ein Mittel zum Senden von wenigstens zwei Bündeln elektromagnetischer Wellen (10, 12), wobei die beiden Bündel von unterschiedlicher Frequenz sind, wenigstens ein Mittel zum Empfang der Bündel elektromagnetischer Wellen, die das polyphasische Milieu (14) durchquert haben, wobei die Mittel zum Senden und zum Empfang in der Fluchtlinie der Fenster angeordnet sind und ein Mittel (21) zur Bearbeitung und zur Steuerung umfasst, das es ermöglicht, den Besetzungsgrad der flüssigen Phase und/oder der Gasphase für einen vorgegebenen Abschnitt der Leitung durch Vergleich der Messungen von Amplitude und Phasenversetzung der beiden Bündel elektromagnetischer Wellen, die das polyphasische Milieu durchquert haben, mit vorher gespeicherten Daten zu bestimmen, indem die Frequenzen der Bündel elektromagnetischer Wellen berücksichtigt werden.

12. Vorrichtung nach Anspruch 11, in der die Leitung mit einem Beruhigungselement ausgerüstet ist, um ein geschichtetes Fließen der Phasen zu begünstigen.

13. Vorrichtung nach einem der Ansprüche 11 und 12, in der die Mittel zum Senden (12) und zum Empfang (14) Breitbandantennen sind, die mehrere Elemente umfassen, wobei die Elemente voneinander durch ein erstes Material (r) getrennt sind und in der die Vorrichtung ein zweites Material (c) umfasst, das zwischen den Antennen (12, 14) und den transparenten Fenstern (13, 13') auf den elektromagnetischen Wellen der Leitung angeordnet ist, wobei die ersten und zweiten Materialien dielektrische Eigenschaften haben, die es ermöglichen, die Antennen einer Variation an relativer Durchlässigkeit des polyphasischen Milieus anzupassen.

14. Vorrichtung nach Anspruch 13, in der das erste Material ein Epoxydharz ist und das zweite Material eine Keramik ist, welche dahin ausgelegt sind, hohen Temperatur- (T) und Druckwerten (P), jeweils über 100°C und 100 bar zu widerstehen.

15. Vorrichtung nach Anspruch 11, die eine Vorrichtung umfasst, welche es ermöglicht, die Geschwindigkeit von wenigstens einer Phase des polyphasischen Milieus zu messen.

16. Verwendung des Verfahrens gemäß einem der Ansprüche 1 bis 10 und der Vorrichtung gemäß einem der Ansprüche 11 bis 15 bei der Bestimmung des Anteils der Phasen, die einen Erdölabstrom bilden.

## Claims

1. Method permitting determination of the proportion of at least one phase forming a part of a polyphasic medium including at least one liquid phase and at least one gaseous phase, the said phases having a dielectric constant permitting their discrimination, the said method including at least one measurement cycle defined by the following steps:
a) the polyphasic medium is irradiated with a beam of electromagnetic waves from a first transmission source, the said beam having a frequency value (fe),
b) the value of the amplitude (Aei) and phase-shift (Phei) of the beam of electromagnetic waves which has passed through the said medium is measured, in at least one zone fixed relative to the polyphasic medium,
c) the value of the frequency of the beam of electromagnetic waves is varied from (fe) to a frequency (fe+1), and steps a) and b) are reiterated .
d) the proportion of each of the liquid and/or gaseous phases is determined for at least one zone by comparing the measurements obtained in steps b) and c) with previously stored data in a processing means, taking into account the associated frequency value.

2. Method as described in claim 1, in which the previously stored data are measurements of amplitude and phase-shift of a beam of electromagnetic waves which has passed through a fluid of known composition.

3. Method as described in one of the preceding claims, in which the said medium is flowing and in which before step a) the flow turbulences are damped for the phases to be in the form of strata arranged according to the density of the said phases.

4. Method as described in claim 1, in which the polyphasic medium flowing in a conduit of given section, the measurement cycle including steps a) to d) is performed one or more times and at a plurality of points, and the distribution and proportion of at least one phase is deduced therefrom for a conduit section defined by the direction of the beam of microwaves and one of the sides of the conduit having a direction not parallel with the direction of propagation of the beam of electromagnetic waves.

5. Method as described in claim 1, in which a transmission antenna (12) formed of a plurality of elements (12i) and a reception antenna (14) including a plurality of elements (14i) are used, step a) is performed by irradiating the medium from all the elements (12i) of the transmission antenna (12), and then step b) is performed by scanning all the elements (14i) of the reception antenna (14) one after the other.

6. Method as described in claim 1, in which a transmission antenna formed of a plurality of elements (12i) and a reception antenna including a plurality of elements (14i) are used, step a) is performed by irradiating the medium from one element (12i) of the transmission antenna (12) and then step b) is performed by scanning the corresponding element (14i) of the reception antenna (14) and this operation is reiterated for all the antenna elements (12i) and (14i).

7. Method as described in claim 1, in which a transmission antenna formed of a plurality of elements (12i) and a reception antenna including a plurality of elements (14i) are used, step a) is performed by irradiating the medium from one element (12i) of the transmission antenna (12), and then step b) is performed by scanning all the elements (14i) of the reception antenna (14) one after the other.

8. Method as described in claim 2, in which the said fluid of known composition is a polyphasic fluid the nature and proportion of the phases of which are known.

9. Method as described in claim 1, in which the polyphasic medium is irradiated with a beam of electromagnetic waves having a frequency value of between 2 and 8 GHz.

10. Method as described in claim 4, in which the velocity of at least one phase, such as the liquid phase and/or the gaseous phase contained in the polyphasic medium is measured by Doppler effect by irradiating the medium with a beam of electromagnetic waves and/or an ultrasonic wave and the flow-rate of the or of each of the phases is determined.

11. Device for determining the proportion of at least one phase contained in a polyphasic medium, the said polyphasic medium being formed of at least one liquid phase and at least one gaseous phase, including in combination at least one conduit for circulation of the said medium, having a known section and windows transparent to electromagnetic waves, a means for transmission of at least two beams of electromagnetic waves (10, 12), the two beams being of different frequencies, at least one means for reception of the beams of electromagnetic waves which have passed through the said polyphasic medium (14), the transmission and reception means being situated in alignment with the windows, and a processing and control means (21) permitting determination of the rate of occupation of the liquid and/or of the gaseous phase for a given section of the conduct by comparison of the amplitude and phase-shift measurements of the said two beams of electromagnetic waves which have passed through the polyphasic medium with previously stored data, taking into account the frequencies of the said beams of electromagnetic waves.

12. Device as described in claim 11, in which the conduit is provided with a tranquillising element to favour stratified flow of the said phases.

13. , Device as described in one of claims 11 and 12, in which the transmission (12) and reception (14) means are broadband antennae comprising a plurality of elements, the said elements being separated from each other by a first material (r), and in which the device includes a second material (c) situated between the said antennae (12, 14) and the said windows (13, 13') of the conduit transparent to the electromagnetic waves, the said first and second materials having dielectric characteristics allowing the said antennae to be adapted to a variation in relative dielectric constant of the polyphasic medium.

14. Device as described in claim 13, in which the said first material is an epoxy resin and the second material is a ceramic suitable to withstand high values of temperature (T) and pressure (P), greater than 100°C and 100 bars respectively.

15. Device as described in claim 11, including a device allowing measurement of the velocity of at least one phase of the polyphasic medium.

16. Application of the method as described in one of claims 1 to 10 and of the device as described in one of claims 11 to 15 to the determination of the proportion of the phases making up a petroleum effluent.
